# EUROPEAN PATENT SPECIFICATION

(11) **EP 3 390 815 B1**
(45) Date of publication and mention of the grant of the patent: **12.02.2020**
(21) Application number: 16825914.1
(22) Date of filing: 19.12.2016
(51) Int. Cl.: F03D 7/02

(54) **BIOMIMETIC WIND TURBINE DESIGN WITH LIFT-ENHANCING PERIODIC STALL**
BIOMIMETISCHES WINDTURBINENDESIGN MIT AUFTRIEBSERHÖHENDEM PERIODISCHEM STRÖMUNGSABRISS
CONCEPTION DE TURBINE ÉOLIENNE BIOMIMÉTIQUE AVEC DÉCROCHAGE PÉRIODIQUE AMÉLIORANT L'ÉLÉVATION

(30) Priority: 18.12.2015 NL 2015992
(43) Date of publication of application: 24.10.2018
(73) Proprietor: Rijksuniversiteit Groningen, 9712 CP Groningen (NL)
(72) Inventor: STAMHUIS, Eize Jan, 9747 AG Groningen (NL)
(74) Representative: Nederlandsch Octrooibureau
(86) International application number: PCT/NL2016/050887
(87) International publication number: WO 2017/105244

(56) References cited:
- US-A- 4 291 235
- US-A1- 2006 145 483
- STEVEN BRUNTON ET AL: "Unsteady Aerodynamic Forces on Small-Scale Wings: Experiments, Simulations, and Models", PC-15: ATOMIZATION AND SPRAYS, 7 January 2008 (2008-01-07), XP055360510, DOI: 10.2514/6.2008-520 ISBN: 978-1-62410-128-1
- S Guntur ET AL: "NREL is a national laboratory of the U.S. Department of Energy Office of Energy Efficiency & Renewable Energy Operated by the Alliance for Sustainable Energy, LLC Modeling Dynamic Stall on Wind Turbine Blades Under Rotationally Augmented Flow Fields", , 30 April 2015 (2015-04-30), XP055360572, Retrieved from the Internet: URL:http://www.nrel.gov/docs/fy15osti/6392 5.pdf?gathStatIcon=true [retrieved on 2017-03-30]

## Description

### BACKGROUND

In use, wind turbines extract maximally about 50% of the available wind energy, even at the most favorable conditions, whereas 59 % is the theoretical maximum. At high wind speeds, this is mainly due to the aerodynamic profile of the turbine blades (as they are typically optimized for average wind speeds), by unloading of turbine blades to prevent structural damage and by limitations of the power generator. In low wind speeds, the wind turbines often have trouble starting up due to the aerodynamic profile of the turbine blades being optimized for average wind speed. Energy will only be produced at low wind speeds when a cut-in speed is met, which is at about 40% of the average wind speed. Additionally, energy production typically remains sub-optimal until the maximum extractable power is reached.

The aerodynamic profile is typically designed for an average wind speed according to local flow conditions. In some wind turbines, stall is used to prevent the turbine from over-spinning during very high wind speeds.

### SUMMARY

According to a first aspect of the invention, a wind turbine comprises a rotor; a blade; and a periodic stall system which selectively moves at least part of the blade in an oscillating motion whereby an angle of incidence continuously varies to invoke periodic stall.

By using a periodic stall system which selectively moves at least part of the blade in an oscillating or harmonic motion to continuously vary an angle of incidence to invoke periodic stall, the wind turbine is able to produce more energy, particularly at low speeds. By invoking periodic stall, instantaneous aerodynamic force is greatly increased thereby increasing average aerodynamic force and power yield. The wind turbine is able to use the periodic stall system to start up and extract energy at low wind speeds, which may have been previously not possible using only steady state aerodynamics.

According to an embodiment, the blade further comprises a flap and the periodic stall system selectively moves the flap. Optionally, the flap extends over only a portion of the blade. Further optionally, the flap extends over about 60%- 80% of the blade. Such a periodic stall system can be used with blades which already have flaps, and/or in systems where flaps are desirable. The flap can be moved by a standard flap movement system or by a specific movement system for the periodic stall system. A flap extending over about 60%-80% of the blade length should cover between about 85%-95% of the rotor plane area from where energy is extracted.

According to an embodiment, the periodic stall system selectively moves the entire blade. This can be done with an already present system in the wind turbine, for example, a pitch mechanism, or with a separate movement system.

According to an embodiment, the periodic stall system selectively moves only an outer portion of the entire blade. This can be, for example, the outer 60%, which would still represent over 85% of the harvestable area. Moving only an outer portion of the blade can be easier due to the smaller mass and smaller inertial torques.

According to an embodiment, the periodic stall system comprises an active motion control mechanism to actively control the movement of at least part of the blade. Optionally, the active motion control mechanism controls the movement of at least part of the blade according to wind conditions. Further optionally, the active motion control mechanism can include a processor, other systems in the wind turbine such as the pitch mechanism or flap control mechanism, one or more sensors and/or other components for active control and movement. Such an active control system allows for more precise control of the movements of at least a part of the blade, thereby allowing for starting when needed and turning off when the system is no longer needed.

According to an embodiment, the periodic stall system comprises a passive motion control system. Optionally, the passive motion control system is linked to the rotor such that the selective motion is induced by rotor rotation. Such a passive motion control system is a simple system that is low in maintenance.

According to an embodiment, the periodic stall system selectively moves at least part of the blade in an oscillating or harmonic motion to continuously vary the angle of incidence varies between about 8 degrees and about 20 degrees. Optionally, the angle of incidence could be controlled to vary in other ranges. By continuously varying the angle of incidence from a normal angle of incidence to a higher angle of incidence, periodic stall can be invoked. The angle is varied back to normal before stall hits completely.

According to an embodiment, the wind turbine further comprises a plurality of blades, and wherein the periodic stall system selectively moves at least part of each of the plurality of blades in an oscillating or harmonic motion whereby an angle of incidence continuously varies to invoke periodic stall

According to a second aspect of the invention, a method of inducing lift-enhancing periodic stall in a wind turbine with a rotor and at least one blade comprises selectively moving at least part of the at least one blade in an oscillating motion whereby an angle of incidence continuously varies to invoke periodic stall. By moving at least part of the at least one blade in an oscillating motion to continuously vary the angle of incidence to invoke periodic stall, an increase of overall aerodynamic efficiency of the turbine can be achieved. The oscillating movements which invoke periodic stall, increasing the average aerodynamic force, results in higher yields, particularly at low wind speeds. This can also allow for start-up and energy production at lower wind speeds.

According to an embodiment, the step of selectively moving at least part of the at least one blade in an oscillating motion comprises moving at least part of the at least one blade through an active motion control mechanism to actively control the movement. Optionally, the method further comprising controlling the movement according to wind conditions. An active motion control mechanism which may use the wind can allow for precise control of the periodic stall, thereby ensuring proper use and energy extraction benefits from the system.

According to an embodiment, the step of selectively moving at least part of the at least one blade in an oscillating or harmonic motion comprises moving at least part of the at least one blade through a passive motion control mechanism. Optionally, the step of selectively moving at least part of the at least one blade in an oscillating or harmonic motion by moving at least part of the at least one blade through a passive motion control mechanism comprises moving at least part of at least one blade with the rotation of the rotor. Such a passive motion control mechanism can provide the benefits of a periodic stall system with a limited number of parts and systems, thereby making for a very efficient and low maintenance movement mechanism.

According to an embodiment, the at least one blade comprises a flap, and the step of selectively moving at least part of the at least one blade in an oscillating or harmonic motion whereby an angle of incidence continuously varies comprises selectively moving the flap.

According to an embodiment, the step of selectively moving at least part of the at least one blade in an oscillating or harmonic motion whereby an angle of incidence continuously varies comprises selectively moving the entire blade. Optionally, the step of selectively moving the entire blade comprises selectively moving the entire blade using a pitch mechanism of the wind turbine.

According to an embodiment, the step of selectively moving at least part of the at least one blade in an oscillating or harmonic motion whereby an angle of incidence continuously varies comprises selectively moving an outer portion of the blade.

Such a system moving either the flap, the entire blade, or an outer portion of the blade can work with blades currently in use, applying the periodic stall movements to existing blades and systems, thereby resulting in a system that is more easily implemented with existing turbines and/or blades. Moving only an outer portion of the blade, for example, the outer 60% can result in a system that is easier to move due to smaller masses but still represents a large amount of the harvestable area, thereby simplifying the construction, steering and energy involved in selectively moving the blade.

According to an embodiment, the step of selectively moving at least part of the at least one blade in an oscillating or harmonic motion whereby an angle of incidence continuously varies comprises selectively moving at least part of the at least one blade in an oscillating or harmonic motion to continuously vary the angle of incidence between about 8 degrees and about 20 degrees. Such a range can vary the angle of incidence from a normal state blade to a stall state blade and then back again, thereby invoking limited periodic stall and avoiding complete stall.

According to an embodiment, the method further comprises stopping moving at least part of the at least one blade in the oscillating motion. The movement can be stopped when it is no longer needed, for example, due to the wind speed and/or the rotation speed.

### BRIEF DESCRIPTION OF THE DRAWINGS

FIG. 1 shows a perspective view of a wind turbine with a periodic stall system.
FIG. 2 shows a view of a first embodiment of a blade suitable for use in the wind turbine of Fig. 1, the blade shown in two different positions.
FIG. 3A shows a perspective view of an alternative blade suitable for use in the wind turbine of Fig. 1a.
FIG. 3B shows a view of the blade of 3A with a flap shown in two different positions.

### DETAILED DESCRIPTION

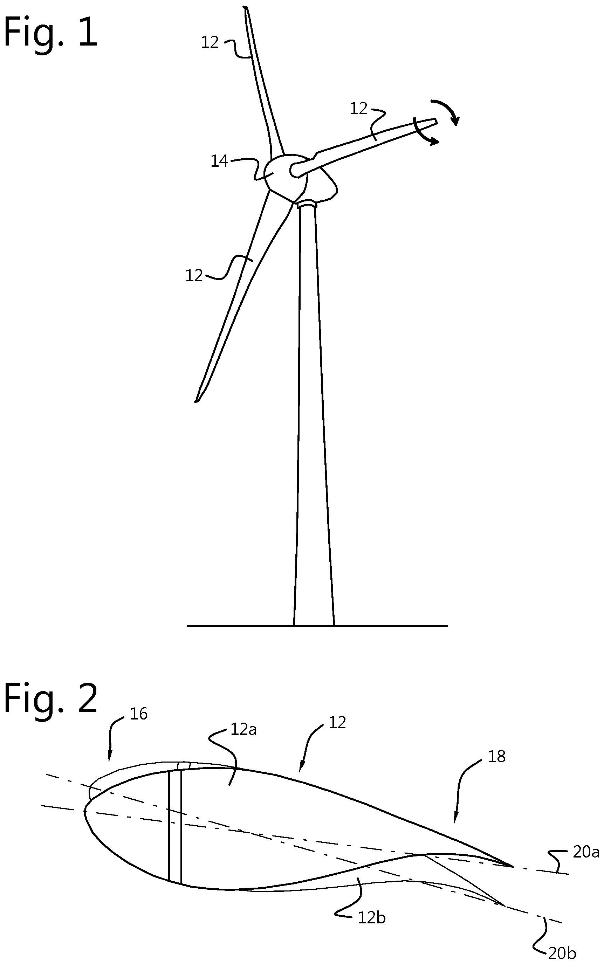

FIG. 1 shows a perspective view of a wind turbine 10 with a periodic stall system. Wind turbine 10 includes three blades 12 and rotor 14. Each blade 12 includes a leading edge 16 and a trailing edge 18. Other wind turbines 10 could include more or fewer blades 12.

Blades 12 are connected to rotor 14 and rotate to convert wind energy to rotational energy. As explained in the Background, the aerodynamic profile of a wind turbine and the blades in particular are typically designed for an average wind speed according to local flow conditions. This often means that the wind turbines have trouble starting up at low wind speeds. Additionally, energy production only occurs when a certain speed is met. Thus, this results in wind turbines only extracting maximally about 50% of the available wind energy.

The current invention uses a periodic stall system to selectively move at least a part of a blade in an oscillating or harmonic motion to continuously vary an angle of incidence to invoke periodic stall. This increases the average net aerodynamic force, even at low wind speeds, which can increase the energy yield during the operational time.

During the onset of stall, when air is first deflected to a higher extent and subsequently a leading edge vortex is building up due to the onset of separation, the bound circulation will increase dramatically resulting is shortlasting increases of lift, up to twice the normal lift at a normal angle of incidence. Blades of this invention are able to harvest this increase. Normally, when building up to stall, after some time the leading edge vortex will have grown to such a size that it will break away, ruining circulation and thereby causing full stall. The relatively fast oscillations of the blades of the current invention, however, cause the profiles to return to a normal angle of incidence before full stall sets in, thereby preserving circulation at normal levels and restabilizing the steady flow pattern. As soon as that has been accomplished, the next oscillation takes place, again raising the aerodynamic forces to much higher levels (up to twice normal). The average aerodynamic forces increase, for example, up to 25 %, due to this oscillation and its associated periodic stall. The vortex shedding frequency, which is a function of the distance through the air travelled by the blade, dictates the oscillation frequency to a certain extent. As stall takes some time to develop, during that short developing time, the aerodynamic forces, especially the lift forces, increase dramatically, and the blades of the current invention oscillate within this time-frame to harvest the periodic increase in lift.

The periodic stall system is shown in several embodiments Figures 2-3B.

Fig. 2 shows a blade 12 in a first position 12a and in a second position 12b, with a leading edge 16, a trailing edge 18, and geometrical incidence lines 20a, 20b. Blade 12 is connected to rotor 14 in a manner known in the art such that it is able to be oscillated. Alternatively, blade 12 could be split such that it is only an outer portion rotating as shown in Fig. 2. This could be, for example, the outer 60% of the blade, with the 40% of the blade closest to rotor 14 fixed to rotor and not rotating as in Fig. 2. This movement of blade 12, in whole or only an outer portion, can be done through an already present pitch mechanism of a wind turbine 10, or can be done through other mechanisms.

In this embodiment, either the entire blade 12 or an outer portion of blade 12 moves in an oscillating or harmonic motion to vary the angle of incidence continually. This variation can be, for example, between about 8 degrees and about 20 degrees. Blade 12 is shown at an incidence angle of about 8 degrees, and blade 12b is shown at an incidence angle of about 20 degrees.

The oscillatory movements continue at low wind speeds to periodically invoke stall, but stop to restore normal flow before complete stall occurs. This has been measured to result in an average aerodynamic force to increase about 25% from a normal value.

The oscillating or harmonic motion can be induced in a number of ways, including through an active control system and through a passive control system. In an active control system, a wind speed could be measured to determine when to use the periodic stall system according to wind conditions. If a measured wind speed is at a level where the periodic stall system would be useful, for example, low wind speeds, the active control system would induce the oscillating motions in blade 12. The active control system could then control the periodic stall system to stop the oscillations when no longer needed, for example at normal or high wind speeds. The active control system could include, for example, a sensor to detect wind speed, a microprocessor, a pitch control system and/or other components.

In a passively controlled system, the movement of all or an outer portion of blade 12 and changing of the angle of incidence can be performed through linking the movement of the moving portion of blade 12 to the rotation of the rotor 14. The rotations of rotor 14 can induce movement in all or an outer portion of blade 12, continuously varying the angle of incidence as blade 12 rotates with rotor 14. Such a system would be a low maintenance, simple system, though would result in a lesser ability for precise control than an actively controlled system.

The frequency of oscillations is a function of the local distance travelled through the air by blade 12 and is measured in chord lengths travelled. This also depends on the airspeed of blade 12 as well as on the local blade 12 profile shape, and thus will vary. For many airfoils, the distance travelled before stall hits completely (which is to be avoided in this case) is about 3-7 chord lengths. When a wind turbine has a chord at 2/3 of the blade 12 length of e.g., 5% of the blade length, this results in about 12 oscillations per rotation cycle. This stays constant with rotational speed, so at a doubling of the rotational speed due to increasing wind force, there will still be about 12 oscillations per cycle, which results in a doubling of the oscillatory frequency. In a passive control system, the number of oscillations would depend a lot on blade 12 geometry, wind turbine 10 size, etc.; and could be around 8 to 16 oscillations per rotation.

By having a periodic stall system to selectively move all or an outer portion of blade 12 in an oscillating motion, periodic stall can be invoked, which can increase the instantaneous aerodynamic force greatly (for example, up to 200% of the original maximum force), which results in an average increase of aerodynamic force compared to steady aerodynamics. This can be an increase of about 125% of the average aerodynamic force, and can be due to a much later onset and much weaker effects of separation at high angles of incidence. This oscillating movement invoked by the periodic stall system results in a power increase, increasing the yield at wind speeds which were not able to produce power in previous systems, and an overall increase in aerodynamic efficiency of the wind turbine 10.

By moving only an outer portion of blade 12, inducing the motion is easier due to a smaller mass and smaller inertial torques without losing a large portion of the harvestable area. For example, if only the outer 60% were rotated, about 85% of the harvestable area would still be used. Thus, only rotating an outer portion of blade 12 can simplify the system, reduce the energy required to induce movement while still maintaining much of the maximum obtainable energy.

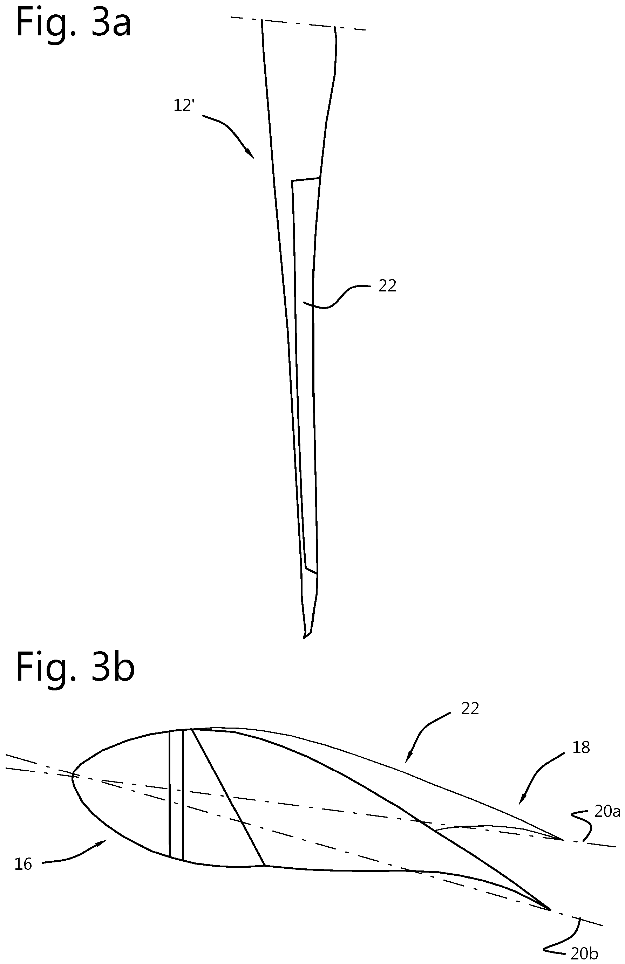

FIG. 3A shows a perspective view of an alternative blade 12' suitable for use in wind turbine 10, and FIG. 3B shows a view of blade 12' with flap 22 shown in two different positions. Blade 12' includes leading edge 16, a trailing edge 18, and geometrical incidence lines 20a, 20b. Flap 22 is located at trailing edge 18, and can extend, for example, about 60%-about 80% of the length of blade 12', or in some embodiments could extend over less or more of the length of blade 12'. Blade 12' can be connected to rotor 14 in a manner known in the art.

In this embodiment, the periodic stall system selectively moves flap 22 of blade 12' in an oscillating or harmonic motion to continuously vary the angle of incidence making blade 12' go from normal geometry to a stall geometry as it rotates with rotor 14, as shown by incidence lines 20a, 20b. This variation can be between about 8 degrees and about 20 degrees, as in the embodiment shown in Fig. 2. The movement of flap 22 is done in such a way that blade 12' profile is still smoothly cambered, but effectively gets a higher angle of incidence increasing stall likelihood and thereby inducing lift-enhancing periodic stall.

The oscillating movements of flap 22 can be done with an active movement system or with a passive movement system, both of which are described in relation to Fig. 2. Active movement system can rely on wind speed and other factor detection to actively move flap 22 according to conditions. A passive movement system could move flap 22 according to rotations with rotor 14. As discussed above, the angle of incidence, movements and oscillations will vary depending on blade 12' geometry, turbine size, and other factors.

By forming a wind turbine 10 with a periodic stall system which selectively moves at least part of a blade 12 in an oscillating or harmonic motion to continuously vary the angle of incidence, wind turbine 10 can produce more energy, particularly at low wind speeds. Selectively moving at least part of blade 12 (a flap 22, whole or outer portion of blade 12); invokes periodic stall, which can result in an average increase of aerodynamic force and result in power increases. Such a system can extract more energy from wind speeds where previous systems would have trouble or be unable to start up and/or produce energy. The periodic stall system has a number of options for implementation, including moving only part or a full blade; using already present systems (such as a pitch mechanism or a flap movement system); and active or passive control systems for movements. By invoking and using unsteady fluid dynamics (periodic short lasting incomplete stall), fluid dynamic peak forces can increase over steady state forces, thereby increasing average force and induced power, and overall increasing the aerodynamic efficiency of the wind turbine 10.

While this has been shown and discussed in relation to wind turbines, it can also be applicable to other systems or devices based on the creation or induction of lift forces or based on flow deflection with aerodynamic profiles/blades, for example, ventilator fans, propellers, helicopter rotors, other impellers, turbines, and any other system working in a fluid such as air or water. These systems can see an increase of gross yield accomplished by implementing lift enhancing periodic stall.

While the invention has been described with reference to exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

## Claims

1. A wind turbine (10) comprising:
a rotor (14);
a blade (12); and
a periodic stall system which selectively moves at least part of the blade in an oscillating motion whereby an angle of incidence continuously varies to invoke periodic stall.

2. The wind turbine of claim 1, wherein the blade further comprises a flap and the periodic stall system selectively moves the flap.

3. The wind turbine of claim 2, wherein the flap extends over only a portion of the blade, preferably wherein the flap extends over about 60%- 80% of the blade.

4. The wind turbine of any of the preceding claims, wherein the periodic stall system selectively moves the entire blade or only an outer portion of the blade.

5. The wind turbine of any of the preceding claims, wherein the periodic stall system comprises an active motion control mechanism to actively control the movement of at least part of the blade, preferably according to wind conditions.

6. The wind turbine of any of claims 1-4, wherein the periodic stall system comprises a passive motion control system, preferably linked to the rotor such that the selective motion is induced by rotor rotation.

7. The wind turbine of any of the preceding claims, wherein the periodic stall system selectively moves at least part of the blade in an oscillating or harmonic motion to continuously vary the angle of incidence varies between about 8 degrees and about 20 degrees.

8. The wind turbine of any of the preceding claims, and further comprising a plurality of blades, and wherein the periodic stall system selectively moves at least part of each of the plurality of blades in an oscillating or harmonic motion whereby an angle of incidence continuously varies to invoke periodic stall

9. A method of inducing lift-enhancing periodic stall in a wind turbine (10) with a rotor (14) and at least one blade, the method comprising:
selectively moving at least part of the at least one blade in an oscillating or harmonic motion whereby an angle of incidence continuously varies to invoke periodic stall.

10. The method of claim 9, wherein the step of selectively moving at least part of the at least one blade in an oscillating or harmonic motion comprises moving at least part of the at least one blade through an active motion control mechanism to actively control the movement, preferably according to wind conditions.

11. The method of claim 9, wherein the step of selectively moving at least part of the at least one blade in an oscillating or harmonic motion comprises moving at least part of the at least one blade through a passive motion control mechanism, preferably comprising moving at least part of at least one blade with the rotation of the rotor.

12. The method of any of claims 9-11, wherein the at least one blade comprises a flap, and the step of selectively moving at least part of the at least one blade in an oscillating or harmonic motion whereby an angle of incidence continuously varies comprises selectively moving the flap.

13. The method of any of claims 9-11, wherein the step of selectively moving at least part of the at least one blade in an oscillating or harmonic motion whereby an angle of incidence continuously varies comprises selectively moving the entire blade or an outer portion of the blade, preferably using a pitch mechanism of the wind turbine.

14. The method of any of claims 9-13, wherein the step of selectively moving at least part of the at least one blade in an oscillating or harmonic motion whereby an angle of incidence continuously varies comprises selectively moving at least part of the at least one blade in an oscillating or harmonic motion to continuously vary the angle of incidence between about 8 degrees and about 20 degrees.

15. The method of any of claims 9-13, and further comprising: stopping moving at least part of the at least one blade in the oscillating or harmonic motion, preferably based on wind speed.

## Patentansprüche

1. Windturbine (10), umfassend:
einen Rotor (14);
ein Blatt (12); und
ein periodisches Strömungsabrisssystem, welches selektiv mindestens einen Teil des Blattes in einer oszillierenden Bewegung bewegt, wobei sich ein Einstellwinkel kontinuierlich verändert, um einen periodischen Strömungsabriss hervorzurufen.

2. Windturbine nach Anspruch 1, wobei das Blatt ferner eine Klappe umfasst und das periodische Strömungsabrisssystem die Klappe selektiv bewegt.

3. Windturbine nach Anspruch 2, wobei sich die Klappe nur über einen Bereich des Blattes erstreckt, vorzugsweise wobei sich die Klappe über ungefähr 60 % bis 80 % des Blattes erstreckt.

4. Windturbine nach einem der vorangehenden Ansprüche, wobei das periodische Strömungsabrisssystem das gesamte Blatt oder nur einen äußeren Bereich des Blattes selektiv bewegt.

5. Windturbine nach einem der vorangehenden Ansprüche, wobei das periodische Strömungsabrisssystem einen aktiven Bewegungssteuerungsmechanismus umfasst, um die Bewegung von mindestens einem Teil des Blattes aktiv zu steuern, vorzugsweise entsprechend der Windverhältnisse.

6. Windturbine nach einem der Ansprüche 1-4, wobei das periodische Strömungsabrisssystem ein passives Bewegungssteuerungssystem umfasst, das vorzugsweise so mit dem Rotor verknüpft ist, dass die selektive Bewegung durch die Rotordrehung herbeigeführt wird.

7. Windturbine nach einem der vorangehenden Ansprüche, wobei das periodische Strömungsabrisssystem mindestens einen Teil des Blattes in einer oszillierenden oder harmonischen Bewegung selektiv bewegt, um den Einstellwinkel kontinuierlich zwischen ungefähr 8 Grad und ungefähr 20 Grad zu verändern.

8. Windturbine nach einem der vorangehenden Ansprüche, und ferner umfassend eine Mehrzahl von Blättern, und wobei das periodische Strömungsabrisssystem mindestens einen Teil jedes Blattes aus der Mehrzahl von Blättern in einer oszillierenden oder harmonischen Bewegung selektiv bewegt, wobei sich ein Einstellwinkel kontinuierlich verändert, um einen periodischen Strömungsabriss hervorzurufen.

9. Verfahren zum Herbeiführen von auftriebserhöhendem periodischem Strömungsabriss in einer Windturbine (10) mit einem Rotor (14) und mindestens einem Blatt, das Verfahren umfassend:
selektives Bewegen von mindestens einem Teil des mindestens einen Blattes in einer oszillierenden oder harmonischen Bewegung, wobei sich ein Einstellwinkel kontinuierlich verändert, um einen periodischen Strömungsabriss hervorzurufen.

10. Verfahren nach Anspruch 9, wobei der Schritt des selektiven Bewegens von mindestens einem Teil des mindestens einen Blattes in einer oszillierenden oder harmonischen Bewegung umfasst: Bewegen von mindestens einem Teil des mindestens einen Blattes durch einen aktiven Bewegungssteuerungsmechanismus, um die Bewegung aktiv zu steuern, vorzugsweise entsprechend der Windverhältnisse.

11. Verfahren nach Anspruch 9, wobei der Schritt des selektiven Bewegens von mindestens einem Teil des mindestens einen Blattes in einer oszillierenden oder harmonischen Bewegung umfasst: Bewegen von mindestens einem Teil des mindestens einen Blattes durch einen passiven Bewegungssteuerungsmechanismus, vorzugsweise umfassend: Bewegen von mindestens einem Teil des mindestens einen Blattes mit der Rotordrehung.

12. Verfahren nach einem der Ansprüche 9-11, wobei das mindestens eine Blatt eine Klappe umfasst und der Schritt des selektiven Bewegens von mindestens einem Teil des mindestens einen Blattes in einer oszillierenden oder harmonischen Bewegung, wobei sich ein Einstellwinkel kontinuierlich verändert, umfasst: selektives Bewegen der Klappe.

13. Verfahren nach einem der Ansprüche 9-11, wobei der Schritt des selektiven Bewegens von mindestens einem Teil des mindestens einen Blattes in einer oszillierenden oder harmonischen Bewegung, wobei sich ein Einstellwinkel kontinuierlich verändert, umfasst: selektives Bewegen des gesamten Blattes oder eines äußeren Bereichs des Blattes, vorzugsweise unter Verwendung eines Verstellmechanismus der Windturbine.

14. Verfahren nach einem der Ansprüche 9-13, wobei der Schritt des selektiven Bewegens von mindestens einem Teil des mindestens einen Blattes in einer oszillierenden oder harmonischen Bewegung, wobei sich ein Einstellwinkel kontinuierlich verändert, umfasst: selektives Bewegen von mindestens einem Teil des mindestens einen Blattes in einer oszillierenden oder harmonischen Bewegung, um den Einstellwinkel kontinuierlich zwischen ungefähr 8 Grad und ungefähr 20 Grad zu verändern.

15. Verfahren nach einem der Ansprüche 9-13, ferner umfassend: Anhalten der Bewegung von mindestens einem Teil des mindestens einen Blattes in der oszillierenden oder harmonischen Bewegung, vorzugsweise auf der Grundlage der Windgeschwindigkeit.

## Revendications

1. Éolienne (10) comprenant :
un rotor (14) ;
une pale (12) et
un système de décrochage périodique qui déplace sélectivement au moins une partie de la pale selon un mouvement oscillant, de sorte qu'un angle d'incidence varie en permanence pour permettre un décrochage périodique.

2. Eolienne selon la revendication 1, dans laquelle la pale comprend en outre un volet et le système de décrochage périodique déplace sélectivement le volet.

3. Eolienne selon la revendication 2, dans laquelle le volet ne s'étend que sur une partie de la pale, de préférence dans laquelle le volet s'étend sur environ 60 % à 80 % de la pale.

4. Éolienne selon l'une des quelconques revendications précédentes, dans laquelle le système de décrochage périodique déplace sélectivement toute la pale ou seulement une partie extérieure de la pale.

5. Éolienne selon l'une des quelconques revendications précédentes, dans laquelle le système de décrochage périodique comprend un mécanisme de commande de mouvement active pour commander activement le mouvement d'au moins une partie de la pale, de préférence en fonction des conditions de vent.

6. Éolienne selon l'une des quelconques revendications 1 à 4, dans laquelle le système de décrochage périodique comprend un système de commande de mouvement passive, de préférence relié au rotor de sorte que le mouvement sélectif soit induit par une rotation de rotor.

7. Éolienne selon l'une des quelconques revendications précédentes, dans laquelle le système de décrochage périodique déplace sélectivement au moins une partie de la pale selon un mouvement oscillant ou harmonique pour faire varier en permanence l'angle d'incidence, qui varie entre environ 8 degrés et environ 20 degrés.

8. Eolienne selon l'une des quelconques revendications précédentes, comprenant en outre une pluralité de pales, et dans laquelle le système de décrochage périodique déplace sélectivement au moins une partie de chacune de la pluralité des pales selon un mouvement oscillant ou harmonique, de telle sorte qu'un angle d'incidence varie en continu pour permettre un décrochage périodique.

9. Méthode pour induire un décrochage périodique améliorant la portance dans une éolienne (10) avec un rotor (14) et au moins une pale, la méthode comprenant l'étape consistant à :
déplacer sélectivement au moins une partie de la au moins une pale dans un mouvement oscillant ou harmonique, de sorte qu'un angle d'incidence varie en continu pour permettre un décrochage périodique.

10. Méthode selon la revendication 9, dans laquelle l'étape de déplacement sélectif d'au moins une partie de la au moins une pale selon un mouvement oscillant ou harmonique comprend le déplacement d'au moins une partie de la au moins une pale par un mécanisme de commande de mouvement active pour commander activement le mouvement, de préférence en fonction des conditions de vent.

11. Méthode selon la revendication 9, dans laquelle l'étape de déplacement sélectif d'au moins une partie de la au moins une pale selon un mouvement oscillant ou harmonique comprend le déplacement d'au moins une partie de la au moins une pale par un mécanisme de commande de mouvement passive, comprenant de préférence au moins une partie d'au moins une pale avec la rotation du rotor.

12. Méthode selon l'une quelconques des revendications 9 à 11, dans laquelle la au moins une pale comprend un volet, et l'étape consistant à déplacer sélectivement au moins une partie de la au moins une pale selon un mouvement oscillant ou harmonique de telle sorte qu'un angle d'incidence varie en continu comprend le déplacement sélectif du volet.

13. Méthode selon l'une quelconques des revendications 9 à 11, dans laquelle l'étape de déplacement sélectif d'au moins une partie de la au moins une pale selon un mouvement oscillant ou harmonique de telle sorte qu'un angle d'incidence varie en continu comprend le déplacement sélectif de la pale entière ou d'une partie extérieure de la pale, en utilisant de préférence un mécanisme de tangage de l'éolienne.

14. Méthode selon l'une quelconques des revendications 9 à 13, dans laquelle l'étape de déplacement sélectif d'au moins une partie de la au moins une pale selon un mouvement oscillant ou harmonique de telle sorte qu'un angle d'incidence varie en continu comprend le déplacement sélectif d'au moins une partie de la au moins une pale selon un mouvement oscillant ou harmonique pour faire varier en continue l'angle d'incidence entre environ 8 degrés et environ 20 degrés.

15. Méthode selon l'une des quelconques revendications 9 à 13, et comprenant en outre : l'arrêt du déplacement d'au moins une partie de la au moins une pale selon le mouvement oscillant ou harmonique, de préférence en fonction de la vitesse du vent.
